# EUROPEAN PATENT SPECIFICATION

(11) **EP 3 777 523 B1**
(45) Date of publication and mention of the grant of the patent: **08.03.2023**
(21) Application number: 19191850.7
(22) Date of filing: 14.08.2019
(51) Int. Cl.: A01G 25/16

(54) **GARDEN HOSE ON/OFF TIMER UNIT WITH VIEWING ANGLE ADJUSTABLE DISPLAY PANEL**
GARTENSCHLAUCH-EIN-/AUSSCHALTUHR MIT ANZEIGETAFEL MIT EINSTELLBAREM SICHTWINKEL
UNITÉ DE MINUTERIE DE MARCHE/ARRÊT DE TUYAU DE JARDIN AVEC RÉGLAGE DE L'ANGLE DE VISUALISATION DU PANNEAU D'AFFICHAGE

(43) Date of publication of application: 17.02.2021
(73) Proprietor: Shin Tai Spurt Water Of The Garden Tools Co., Ltd., Chang-Hua Hsien (TW)
(72) Inventor: Chen, Chin-Yuan, Chang-Hua Hsien (TW)
(74) Representative: Lang, Christian

(56) References cited:
- DE-U1-202013 001 794
- US-A1- 2010 163 126
- US-A1- 2011 226 363
- US-B1- 6 337 635

## Description

### Field of the Invention

The present invention relates to a garden hose ON/OFF timer unit, especially to a garden hose ON/OFF timer unit which is mounted between a water hose and a water equipment or between two water hoses for setting the turn-on/off time for water flow and which is provided with a viewing angle adjustable display panel.

### Description of Related Art

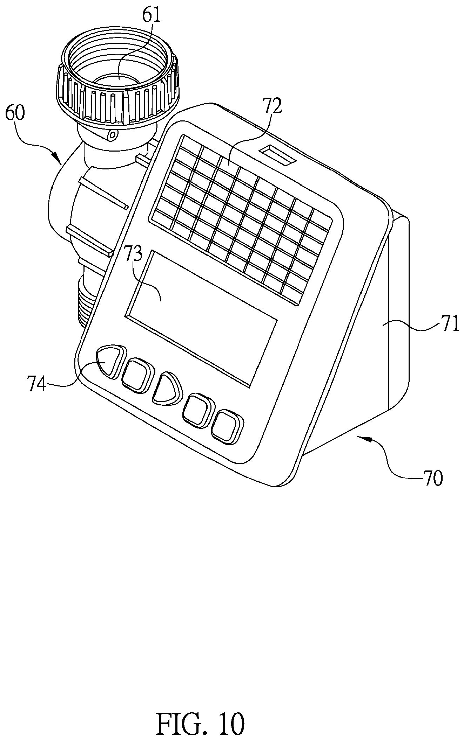

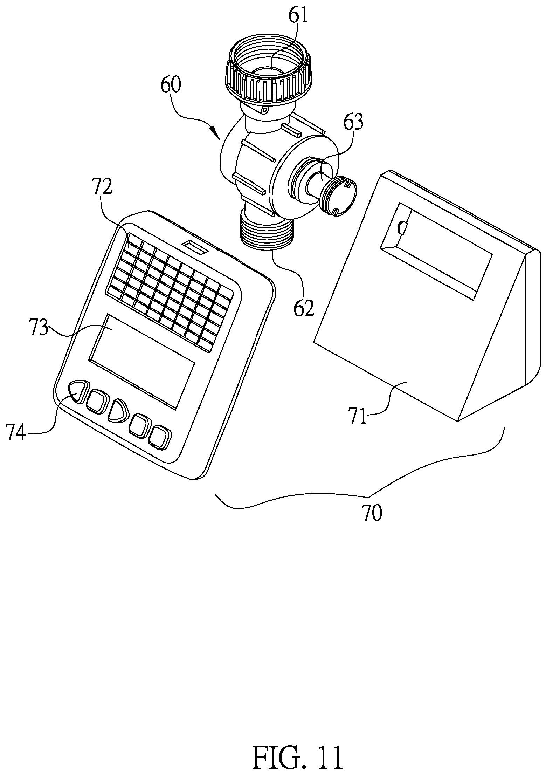

A conventional garden hose ON/OFF timer unit with viewing angle adjustable display panel is shown in Fig. 10 and Fig. 11. The garden hose ON/OFF timer unit comprises a water valve 60 and a timer 70. The water valve 60 has a water inlet 61 and a water outlet 62. An electromagnetic solenoid 63 is disposed on a side of the water valve 60. Thus, the electromagnetic solenoid 63 can control the ON- and OFF-state of the inside of the water valve 60 by the timer 70. The timer 70 is arranged on a side of the water valve 60 as to provide the electromagnetic solenoid 63 with current. Furthermore, the timer 70 comprises a main body 71 which is enclosed and fastened on the electromagnetic solenoid 63 in such a way that the main body 71 is integrated in the electromagnetic solenoid 63. A solar module 72, a display panel 73 and an operational interface 74 operated by pressing are disposed on the main body 71. To use the ON/OFF timer, the water valve 60 is mounted between water hoses. The user can set the time duration and the time interval for the automatic sprinkling by pressing the keys of the operational interface. On setting the values, the values will be shown on the display panel 73.

However, there are still some deficiencies with the conventional garden hose ON/OFF timer unit mentioned above. The display panel 73 together with the main body 71 of the timer 70 is directly fastened on the water valve 60 in such a way that it is not possible for the display panel 73 to pivot with respect to the water valve 60. The display panel 73, which is a liquid crystal display (LCD) here, is limited regarding the viewing angle. Therefore, if it is neither possible to dispose the display panel 73 in an optimal viewing angle during mounting the garden hose ON/OFF timer unit, nor possible to adjust the display panel 73 according to requirements, it may result in problems with normal usage of the display panel 73 or difficulties in operating and setting values. If it is not possible to swivel the display panel 73 for adjusting, it may be not possible to check and operate the display panel 73 easily due to too strong light or the angle at which the display panel 73 is placed on the ground.

Document US 6 337 635 B1 relates to a conventional garden hose timer unit with a viewing angle adjustable display panel according to the preamble of claim 1, comprising a main body, a valve assembly, a mount, a movable base and a controller unit.

### SUMMARY OF THE INVENTION

It is a primary object of the present invention to provide a garden hose ON/OFF timer unit with viewing angle adjustable display panel.
In order to achieve the above object, a garden hose ON/OFF timer unit with viewing angle adjustable display panel according to claim 1 is provided, which comprises a main body, an ON/OFF valve assembly, a fixed mount, a movable base and a timer. The main body has a water inlet and a water outlet so that the main body can be connected respectively to a hose through the water inlet and the water outlet. Furthermore, a valve tube is arranged between the water inlet and the water outlet and extends from a side of the main body. The ON/OFF valve assembly is mounted on the valve tube. The operation of the ON/OFF valve assembly is controlled by the timer. The water passage in the main body can be opened and closed by switching the ON/OFF valve assembly on and off. The fixed mount is fastened on the main body in such a way that the water inlet, the water outlet and valve tube all extend out of the fixed mount without any problems. The movable base is disposed on the position of the valve tube and pivotably connected to the fixed mount so that the movable base is capable of pivoting on the fixed mount. After pivoting, the movable base can be surely positioned on a desired position. The timer is mounted in the movable base und provided with a display panel and an operational interface operated by pressing keys, whereas the display panel and the operational interface are exposed on the movable base. When the movable base pivots with respect to the fixed mount, the timer will be moved together with the movable base. Thus, the display panel can be adjusted to such a viewing angle at which it is easier to check and operate the garden hose ON/OFF timer unit or set values.

The garden hose ON/OFF timer unit with viewing angle adjustable display panel according to the present invention has following advantages:
1. It is possible for the timer and the display panel to pivot with the movable base on the fixed mount. The timer can be adjusted to an optimal viewing angle. After pivoting, it is further possible to position the movable base and the timer adequately and surely. Owing to this structural design, it is easier to use, operate and check the garden hose ON/OFF timer unit irrespectively of the viewing angle, sun light and the angle at which the display panel is placed. It is also possible for each user to adjust the viewing angle of the display panel individually so that the garden hose ON/OFF timer unit is capable of being adapted to each individual user.
2. Since the timer is angularly adjustable, it is possible to knock off or remove dust, mud, sand as well as drops of water adhered to the display panel easily. Thus, the display panel can be kept clean and difficulties in operating and checking the timer caused due to adherence of foreign bodies to the display panel and due to difficulties in removing the foreign bodies can be avoided.
3. If the main body is vertically disposed in use, it is possible to move the movable base together with the display panel up and down in order to adjust the viewing angle to an optimal viewing angle. If the main body is transversely disposed, it is possible for the movable base to pivot to the left and right together with the display panel. Owing to this structural design, the display panel can be angularly adjusted irrespectively to the position of the main body.

### BRIEF DESCRIPTION OF THE DRAWINGS

The structure and the technical means adopted by the present invention to achieve the above and other objects can be best understood by referring to the following detailed description of the preferred embodiment and the accompanying drawings, wherein:
Fig. 1 is a perspective view of a preferred embodiment of a garden hose ON/OFF timer unit with viewing angle adjustable display panel according to the present invention in the assembled state;
Fig. 2 is an explosive view of the garden hose ON/OFF timer unit shown in Fig. 1;
Fig. 3 is a first sectional view showing the water shut-off state of the garden hose ON/OFF timer unit shown in Fig. 1 in the assembled state;
Fig. 4 is a second sectional view showing the water shut-off state of the garden hose ON/OFF timer unit shown in Fig. 1 in the assembled state;
Fig. 5 is a sectional view of the garden hose ON/OFF timer unit shown in Fig. 1 in the assembled state;
Fig. 6 is a schematic drawing showing the water turn-on state of the garden hose ON/OFF timer unit shown in Fig. 1 after the main body is brought to the conducting state.
Fig. 7 is a schematic drawing showing positioning the display panel of the garden hose ON/OFF timer unit shown in Fig. 1 after the viewing angle of the display panel is adjusted;

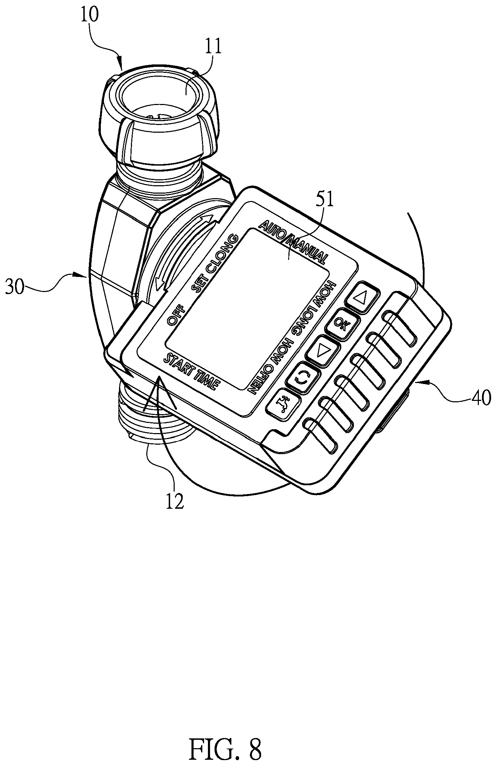

Fig. 8 is a schematic drawing showing adjusting the display panel of the garden hose ON/OFF timer unit shown in Fig. 7 up and down;

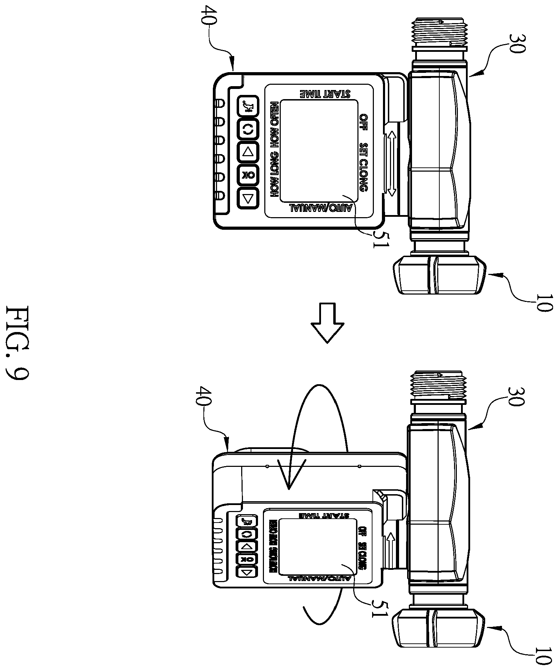

Fig. 9 is a schematic drawing showing adjusting the display panel of the garden hose ON/OFF timer unit shown in Fig. 7 to the left and right;
Fig. 10 is a perspective view of a conventional garden hose ON/OFF timer unit in the assembled state; and
Fig. 11 is an explosive view of the conventional garden hose ON/OFF timer unit shown in Fig. 10.

### DETAILED DESCRIPTION OF THE PREFERRED EMBODIMENT

In order to learn features and functions of the present invention, please refer to the following embodiment and the figures.

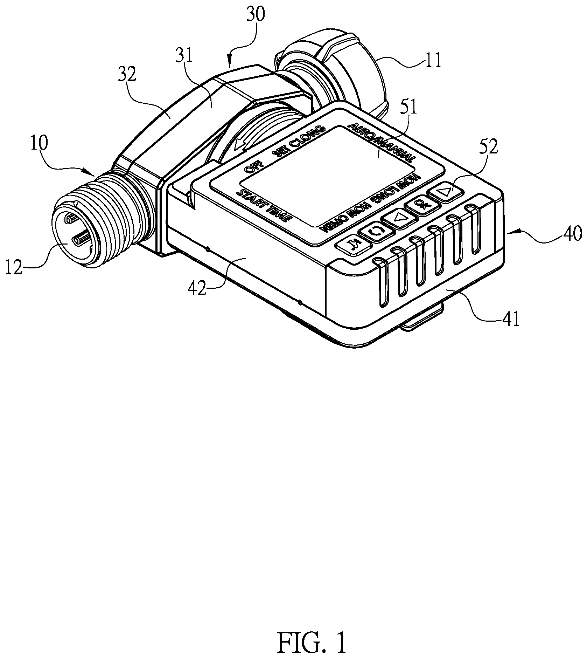

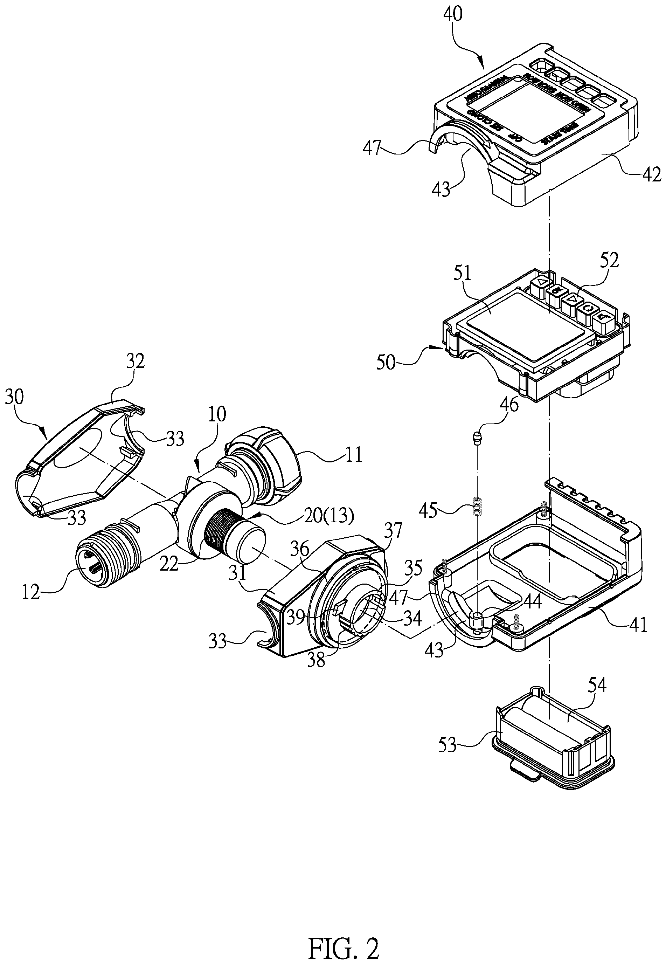

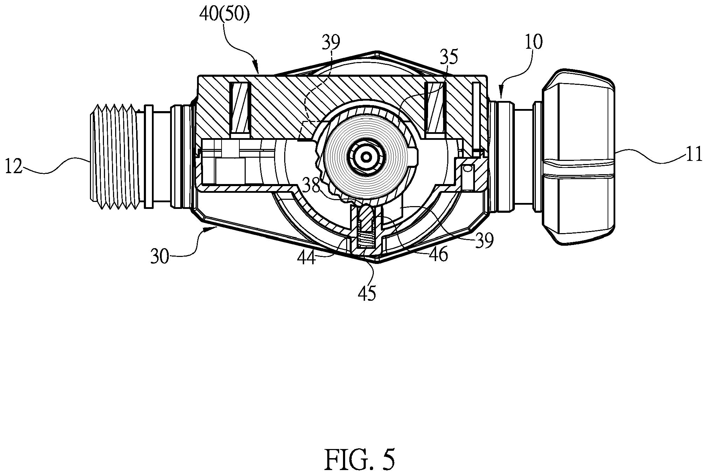

Refer to Fig. 1 to Fig. 5, a garden hose according to the present invention comprises a main body 10, an ON/OFF valve assembly 20, a fixed mount 30, a movable base 40 and a timer 50. The main body 10 has a water inlet 11 and a water outlet 12 so that the main body 10 can be connected respectively to a hose through the water inlet 11 and the water outlet 12. Furthermore, a valve tube 13 is arranged between the water inlet 11 and the water outlet 12 and extends from a side of the main body 10. The ON/OFF valve assembly 20 is mounted on the valve tube 13. The operation of the ON/OFF valve assembly 20 is controlled by the timer 50. The water passage in the main body 10 can be opened and closed by switching the ON/OFF valve assembly 20 on and off. The fixed mount 30 is fastened on the main body 10 in such a way that the water inlet 11, the water outlet 12 and valve tube 13 all extend out of the fixed mount 30 without any problems. The movable base 40 is disposed on the position of the valve tube 13 and pivotably connected to the fixed mount 30 so that the movable base 40 is capable of pivoting on the fixed mount 30. After pivoting, the movable base 40 can be surely positioned on a desired position. The timer 50 is mounted in the movable base 40 und provided with a display panel 51 and an operational interface 52 operated by pressing keys, whereas the display panel 51 and the operational interface 52 are exposed on the movable base 40. When the movable base 40 pivots with respect to the fixed mount 30, the timer 50 will be moved together with the movable base 40. Thus, the display panel 51 can be adjusted to such a viewing angle at which it is easier to check and operate the garden hose ON/OFF timer unit or set values.

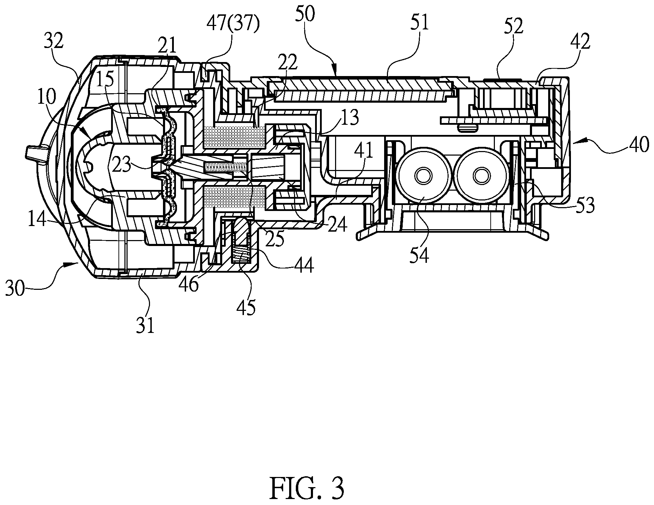

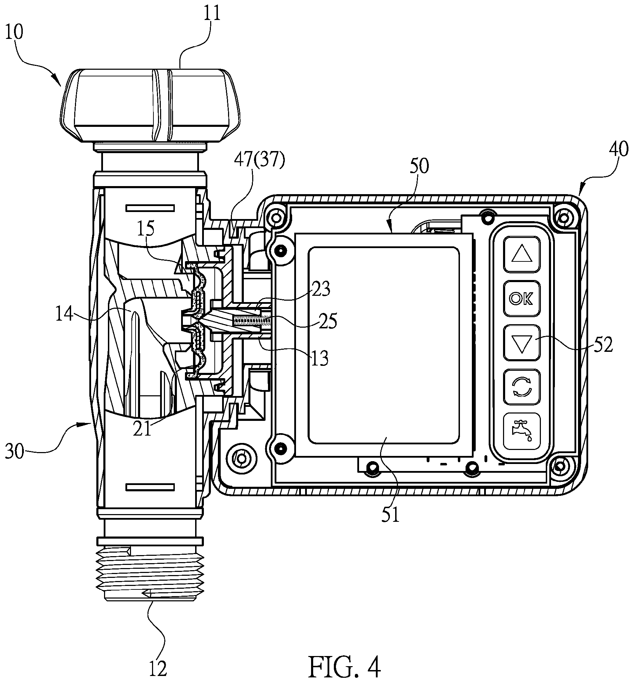

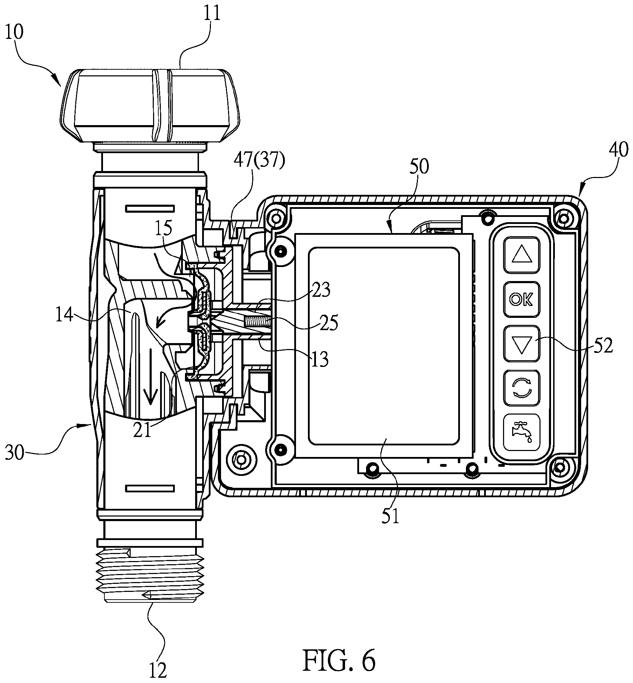

According to the invention, a communicating tube 14 is disposed inside the main body 10 in opposite to the valve tube 13 and coaxially to the same. The arrangement of the communicating tube 14 serves as a separation, whereas a ring-shaped passage 15 is arranged between the communicating tube 14 and the water inlet 11 so that the communicating tube 14 and the water inlet 11 are connected to each other indirectly by means of the ring-shaped passage 15, while the communicating tube 14 and the water outlet 12 are directly connected to each other. Furthermore, the ON/OFF valve assembly 20 comprises a valve disc 21, an electromagnetic coil 22, a valve shaft 23 and a magnet 24. The valve disc 21 is arranged in such a way that it covers the communicating tube 14 and the ring-shaped passage 15 from above in order to control the ON/Off-state of the communicating tube 14 and the ring-shaped passage 15. The electromagnetic coil 22 is wound on the external circumference of the valve tube 13. The valve shaft 23 and the magnet 24 are respectively disposed in two rooms inside the valve tube 13. The valve shaft 23 is pre-stressed by the first spring 25 and thus can be pushed in the direction of the valve disc 21. Thereby, to stop the water flow of the main body 10, the electromagnetic coil 22 is powered on by the timer 50 and the valve shaft 23 made of metal is pushed to the valve disc 21 in such a way that it abuts firmly against to the valve disc 21. Thus, the water stop can be kept by the elasticity of the first spring 25 without continuous power consumption after the timer 50 interrupts the power supply (see Fig. 3 and Fig. 4). To start the water flow of the main body 10, the electromagnetic coil 22 is powered on by the timer 50 and thus attracts the valve shaft 23 magnetically. Consequently, the valve shaft 23 is removed from the valve disc 21 and does not abut against the valve disc 21 anymore. So the water inlet 11, the ring-shaped passage 15, the communicating tube 14 and the water outlet 12 can communicate with each other so that water can flow through these parts 11, 15, 14, 12 (please see Fig. 6). When the electromagnetic coil 22 is powered off, the magnetic force of the magnet 24 will be capable of magnetically attracting the valve shaft 23 on the water flow position stably owing to the facts that the valve shaft 23 approaches and that the magnetic force is stronger than the elasticity of the first spring 25. Thus, it is possible to switch between the water stop state and the water flow state stably and to reduce the power consumption of the electromagnetic coil 22.

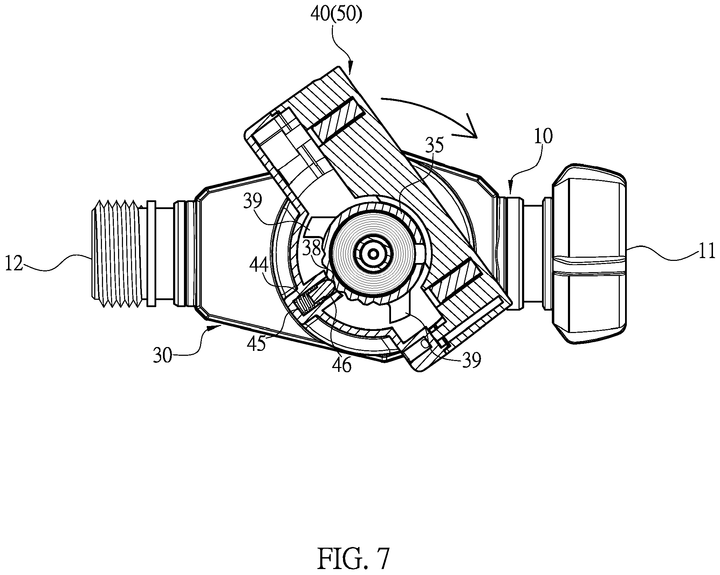

According to the invention, the fixed mount 30 consists of a first enclosure 31 and a second enclosure 32 which are combined with each other. A notch 33 is respectively reserved on each of the two ends of the first enclosure 31 and the second enclosure 32. A through hole 34 is formed in the middle of the first enclosure 31, and a bushing 35 extends from the middle of the first enclosure 31. The notches 33, the through hole 34 and the bushing 35 offer possibilities for evasions. By combining the first enclosure 31 and the second enclosure 32 with each other, the main body 10 is enclosed und locked. Thereby, the water inlet 11, the water outlet 12 and the valve tube 13 can extend out of the fixed mount 30 with any problems, and the fixed mount 30 can also be fastened on the main body 10. A projecting seat 36 is arranged on the first enclosure 31 and serves as a part on which the through hole 34 and the bushing 35 are arranged. An annular groove 37 is arranged on the projecting seat 36. A plurality of positioning recesses 38 is arranged annularly on the external wall of the bushing 35. The movable base 40 consists of a first casing 41 and a second casing 42 which are combined with each other. An opening 43 is respectively reserved on each of the two ends of the first casing 41 and the second casing 42. A positioning hole 44 is formed in the opening 43 of the first casing 41 and/or the second casing 42. A positioning pin 46 pushed by a second spring 45 outwards is set in the positioning hole 44. A barb-shaped locking edge 47 is arranged on the external side of the opening 43 annularly. The bushing 35 of the fixed mount 30 is inserted into the opening 43, and the locking edge 47 engages in the annular groove 37 when combining the first casing 41 and the second casing 42 with each other. Thus, the movable base 40 can be mounted on the position of the valve tube 13 without any problems in such a way that the movable base 40 is pivotably connected to the fixed mount 30. Through inserting the positioning pin 46 elastically in the corresponding positioning recess 38, the movable base 40 can be further surely positioned after pivoting (see Fig. 7).

According to the invention, at least a blocking plate 39 extends from the bushing 35. The blocking plate 39 serves the purpose of limiting the maximal pivoting angle of the movable base 40 und the timer 50.

According to the invention, the timer 50 is further provided with a battery compartment 53 and batteries 54, whereas the batteries 54 provide the timer 50 and the ON/OFF valve assembly 20 with electric power for the operation.

According to the invention, the timer 50 is waterproof, avoiding ingress of moisture in the air or water vapor into the timer 50 during the usage of the timer unit. Thus, defects or damages of the timer 50 caused by moisture or water vapor can be reduced or even avoided.

The movable base 40 can bring the timer 50 to swivel to a relatively vertical angle so that it is easier to knock off dust, mud and sand from the display panel 51 in order to keep the display panel 51 clean.

The garden hose ON/OFF timer unit with viewing angle adjustable display panel according to the present invention has following advantages:
1. It is possible for the timer 50 and the display panel 51 to pivot with the movable base 40 on the fixed mount 30. The timer 50 can be adjusted to an optimal viewing angle. After pivoting, it is further possible to position the movable base 40 and the timer 50 adequately and surely. Owing to this structural design, it is easier to use, operate and check the garden hose ON/OFF timer unit irrespectively of the viewing angle, sun light and the angle at which the display panel is placed. It is also possible for each user to adjust the viewing angle of the display panel 51 individually so that the garden hose ON/OFF timer unit is capable of being adapted to each individual user.
2. Since the timer 50 is angularly adjustable, it is possible to knock off or remove dust, mud, sand as well as drops of water adhered to the display panel 51 easily. Thus, the display panel 51 can be kept clean and difficulties in operating and checking the timer 50 caused due to adherence of foreign bodies to the display panel 51 and due to difficulties in removing the foreign bodies can be avoided.
3. If the main body 10 is vertically disposed in use, it is possible to move the movable base 40 together with the display panel 51 up and down in order to adjust the viewing angle to an optimal viewing angle. If the main body 10 is transversely disposed, it is possible for the movable base 40 to pivot to the left and right together with the display panel 51. Owing to this structural design, the display panel 51 can be angularly adjusted irrespectively to the position of the main body 10.

## Claims

1. A garden hose ON/OFF timer unit with a viewing angle adjustable display panel comprising a main body (10), an ON/OFF valve assembly (20), a fixed mount (30), a movable base (40) and a timer (50), wherein
the main body (10) has a water inlet (11) and a water outlet (12) extending from two opposite ends of a central portion thereof and a valve tube (13) being arranged between the water inlet (11) and the water outlet (12) and extending from a side of the central portion of the main body (10), the ON/OFF valve assembly (20) being mounted on the valve tube (13) and the operation of the ON/OFF valve assembly (20) is controlled by the timer (50) so that the water passage in the main body (10) can be opened and closed by switching the ON/OFF valve assembly (20) on and off;
the fixed mount (30) is fastened on the central portion of the main body (10) in such a way that the water inlet (11), the water outlet (12) and the valve tube (13) all extend out of the fixed mount (30), wherein the movable base (40) is pivotably connected to the fixed mount (30) at a position corresponding to the position of the valve tube (13), so that the movable base (40) is capable of pivoting on the fixed mount (30); and
the timer (50) is mounted in the movable base (40) and provided with a display panel (51) and an operational interface (52) operated by pressing keys, the display panel (51) and the operational interface (52) being exposed on the movable base (40), the timer (50) being movable together with the movable base (40) when pivoting the movable base (40) with respect to the fixed mount (30) for adjusting a viewing angle for the display panel (51);
**characterized in that**
the fixed mount (30) defines a projecting seat (36) in a position corresponding to the position of the valve tube (13), wherein the projecting seat (36) is provided with a through hole (34) for passing the valve tube (13) therethrough and a bushing (35), wherein a plurality of positioning recesses (38) is arranged annularly on the external wall of the bushing (35), the bushing (35) of the fixed mount (30) being inserted into a corresponding opening (43) defined on the movable base (40), wherein the movable base (40) further defines a positioning hole (44), wherein a second spring (45) and a positioning pin (46) to be pushed outwards by the second spring (45) are set in the positioning hole (44), wherein the positioning hole (44) of the movable base (40) and the bushing (35) of the fixed mount (30) are correspondingly arranged, such that the positioning pin (46) is elastically inserted into a corresponding one of the plurality of positioning recesses (38), so that after pivoting to a desired viewing angle, the movable base (40) is fixed in its corresponding position through elastic engagement of the positioning pin (46) in the corresponding positioning recess (38).

2. The garden hose as ON/OFF timer claimed in claim 1, wherein a communicating tube (14) is disposed inside the main body (10) in opposite to the valve tube (13) and coaxially to the same, whereas the arrangement of the communicating tube (14) serves as a separation, whereas a ring-shaped passage (15) is arranged between the communicating tube (14) and the water inlet (11) so that the communicating tube (14) and the water inlet (11) are connected to each other indirectly by means of the ring-shaped passage (15), while the communicating tube (14) and the water outlet (12) are directly connected to each other; and
the ON/OFF valve assembly (20) comprises a valve disc (21) covering the communicating tube (14) and the ring-shaped passage (15) from above, an electromagnetic coil (22) wound on the external circumference of the valve tube (13), a valve shaft (23) made of metal and a magnet (24) respectively disposed in two rooms inside the valve tube (13) sleeved by the electromagnetic coil (22), the valve disc (21) being arranged above the valve shaft (23), the valve shaft (23) being pre-stressed by a first spring (25) in the direction of the valve disc (21), the magnet (24) being disposed below the valve shaft (23) and the first spring (25), the magnetic force of magnet (24) being stronger than the elasticity of the first spring (25);
the timer (50) being configured to allow power supply to the electromagnetic coil (22) for switching the ON/OFF valve assembly (20) between a water stop state and a water flow state,
wherein, when the electromagnetic coil (22) wound on the external circumference of the valve tube (13) is turned on, the metallic valve shaft (23) inside the valve tube (13) is driven to move, wherein, when the timer (50) supplies power to the electromagnetic coil (22) for switching the ON/OFF valve assembly (20) to the water stop state, the electromagnetic coil (22) generates a repelling force pushing the valve shaft (23) to the valve disc (21) in such a way that it abuts against to the valve disc (21) and the valve shaft (23) being kept in this state by the elasticity of the first spring (25) to stop the water flow of the main body (10) also after the timer (50) interrupts the power supply, wherein, when the timer (50) supplies power to the electromagnetic coil (22) for switching the ON/OFF valve assembly (20) from the water stop state to the water flow state, the electromagnetic coil (22) is powered on by the timer (50) and thus attracts the valve shaft (23) magnetically so that the valve shaft (23) is removed from the valve disc (21) and does not abut against the valve disc (21) anymore, whereby the water inlet (11), the ring-shaped passage (15), the communicating tube (14) and the water outlet (12) can communicate with each other so that water can flow through these parts (11, 15, 14, 12), whereas, when the electromagnetic coil (22) is powered off, the magnetic force of the magnet (24) keeps magnetically attracting the valve shaft (23) to maintain the water flow state of the valve shaft (23).

3. The garden hose ON/OFF timer as claimed in claim 1, wherein the fixed mount (30) consists of a first enclosure (31) and a second enclosure (32) which are combined with each other and having a notch (33) reserved on each of the two ends of the first enclosure (31) and the second enclosure (32), the through hole (34) formed in the middle of the first enclosure (31), and the bushing (35) extending from the middle of the first enclosure (31), whereas the notches (33), the through hole (34) and the bushing (35) offer possibilities for evasions, whereas by combining the first enclosure (31) and the second enclosure (32) with each other, the main body (10) is enclosed und locked, whereby the water inlet (11), the water outlet (12) and the valve tube (13) extend out of the fixed mount (30), and the fixed mount (30) being fastened on the main body (10), an annular groove (37) being arranged on the projecting seat (36); and
the movable base (40) consists of a first casing (41) and a second casing (42) which are combined with each other and having a opening (43) reserved on each of the two ends of the first casing (41) and the second casing (42), a positioning hole (44) formed in the opening (43) of the first casing (41) and/or the second casing (42), and a barb-shaped locking edge (47) arranged on the external side of the opening (43) annularly, the locking edge (47) engages in the annular groove (37) when combining the first casing (41) and the second casing (42) with each other, whereby the movable base (40) is mounted on the fixed mount (30) in a position thereof corresponding to the position of the valve tube (13) in such a way that the movable base (40) is pivotably connected to the fixed mount (30).

4. The garden hose as ON/OFF timer claimed in claim 3, wherein at least a blocking plate (39) extends from the bushing (35).

5. The garden hose ON/OFF timer as claimed in claim 1, wherein the timer (50) is further provided with a battery compartment (53) and batteries (54), whereas the batteries (54) provide the timer (50) and the ON/OFF valve assembly (20) with electric power for the operation.

6. The garden hose ON/OFF timer as claimed in claim 1, wherein the movable base (40) allows the timer (50) to swivel to an angle, in which dust, mud and sand are knocked off from the display panel (51) in order to keep the display panel (51) clean.

## Patentansprüche

1. Gartenschlauch-EIN/AUS-Zeitgebereinheit mit einem im Blickwinkel einstellbaren Anzeigefeld, die einen Hauptkörper (10), eine EIN/AUS-Ventilanordnung (20), eine feste Halterung (30), eine bewegliche Basis (40) und einen Zeitgeber (50) umfasst, wobei
der Hauptkörper (10) einen Wassereinlass (11) und einen Wasserauslass (12) aufweist, die sich von zwei gegenüberliegenden Enden eines zentralen Abschnitts desselben erstrecken, und ein Ventilrohr (13), das zwischen dem Wassereinlass (11) und dem Wasserauslass (12) angeordnet ist und sich von einer Seite des zentralen Abschnitts des Hauptkörpers (10) erstreckt, wobei die EIN/AUS-Ventilanordnung (20) auf dem Ventilrohr (13) montiert ist und der Betrieb der EIN/AUS-Ventilanordnung (20) durch den Zeitgeber (50) gesteuert wird, so dass der Wasserdurchgang im Hauptkörper (10) durch Schalten der EIN/AUS-Ventilanordnung (20) geöffnet und geschlossen werden kann,
die feste Halterung (30) ist an dem zentralen Teil des Hauptkörpers (10) so befestigt, dass der Wassereinlass (11), der Wasserauslass (12) und das Ventilrohr (13) sich alle aus der festen Halterung (30) heraus erstrecken, wobei die bewegliche Basis (40) schwenkbar mit der festen Halterung (30) an einer Position verbunden ist, die der Position des Ventilrohrs (13) entspricht, so dass die bewegliche Basis (40) in der Lage ist, an der festen Halterung (30) zu schwenken, und der Zeitgeber (50) in der beweglichen Basis (40) montiert ist und mit einem Anzeigefeld (51) und einer Bedienoberfläche (52) versehen ist, die durch Drücken von Tasten bedient wird, das Anzeigefeld (51) und die Bedienoberfläche (52) an der beweglichen Basis (40) freiliegen, der Zeitgeber (50) zusammen mit der beweglichen Basis (40) beweglich ist, wenn die bewegliche Basis (40) in Bezug auf die feste Halterung (30) geschwenkt wird, um einen Betrachtungswinkel für das Anzeigefeld (51) einzustellen,
**dadurch gekennzeichnet, dass**
die feste Halterung (30) einen vorstehenden Sitz (36) in einer Position definiert, die der Position des Ventilrohrs (13) entspricht, wobei der vorstehende Sitz (36) mit einem Durchgangsloch (34) zum Hindurchführen des Ventilrohrs (13) und einer Buchse (35) versehen ist, wobei eine Mehrzahl von Positionierungsaussparungen (38) ringförmig an der Außenwand der Buchse (35) angeordnet ist, die Buchse (35) der festen Halterung (30) in eine entsprechende Öffnung (43) eingesetzt ist, die an der beweglichen Basis (40) definiert ist, wobei die bewegliche Basis (40) ferner ein Positionierungsloch (44) definiert, wobei eine zweite Feder (45) und ein Positionierungsstift (46), der durch die zweite Feder (45) nach außen zu drücken ist, in das Positionierungsloch (44) eingesetzt sind, wobei das Positionierungsloch (44) der beweglichen Basis (40) und die Buchse (35) der festen Halterung (30) entsprechend angeordnet sind, so dass der Positionierungsstift (46) elastisch in eine entsprechende der Vielzahl von Positionierungsaussparungen (38) eingeführt wird, so dass nach dem Drehen in einen gewünschten Betrachtungswinkel die bewegliche Basis (40) in ihrer entsprechenden Position durch elastisches Eingreifen des Positionierungsstifts (46) in die entsprechende Positionierungsaussparung (38) fixiert wird.

2. Gartenschlauch als EIN/AUS-Zeitgebereinheit nach Anspruch 1, bei welchem ein Verbindungsrohr (14) im Inneren des Hauptkörpers (10) gegenüber dem Ventilrohr (13) und koaxial zu diesem angeordnet ist, wobei die Anordnung des Verbindungsrohres (14) als Trennung dient, wobei ein ringförmiger Durchgang (15) zwischen dem Verbindungsrohr (14) und dem Wassereinlass (11) angeordnet ist, so dass das Verbindungsrohr (14) und der Wassereinlass (11) indirekt durch den ringförmigen Durchgang (15) miteinander verbunden sind, während das Verbindungsrohr (14) und der Wasserauslass (12) direkt miteinander verbunden sind, und
die EIN/AUS-Ventilanordnung (20) umfasst eine Ventilscheibe (21), die das Verbindungsrohr (14) und den ringförmigen Durchgang (15) abdeckt, eine elektromagnetische Spule (22), die auf den Außenumfang des Ventilrohrs (13) gewickelt ist, einen Ventilschaft (23) aus Metall und einen Magneten (24), die jeweils in zwei Räumen im Inneren des Ventilrohrs (13) angeordnet sind und von der elektromagnetischen Spule (22) ummantelt werden, wobei die Ventilscheibe (21) oberhalb des Ventilschafts (23) angeordnet ist, wobei der Ventilschaft (23) durch eine erste Feder (25) in Richtung der Ventilscheibe (21) vorgespannt ist, wobei der Magnet (24) unter dem Ventilschaft (23) und der ersten Feder (25) angeordnet ist, wobei die Magnetkraft des Magneten (24) stärker ist als die Elastizität der ersten Feder (25),
wobei der Zeitgeber (50) so konfiguriert ist, dass er die Stromversorgung der elektromagnetischen Spule (22) ermöglicht, um die EIN/AUS-Ventilanordnung (20) zwischen einem Wasserstoppzustand und einem Wasserflusszustand umzuschalten,
wobei, wenn die elektromagnetische Spule (22), die auf den Außenumfang des Ventilrohrs (13) gewickelt ist, eingeschaltet wird, der metallische Ventilschaft (23) innerhalb des Ventilrohrs (13) angetrieben wird, um sich zu bewegen, wobei, wenn der Zeitgeber (50) die elektromagnetische Spule (22) mit Strom versorgt wird, um die EIN/AUS-Ventilanordnung (20) in den Wasserstoppzustand zu schalten, die elektromagnetische Spule (22) eine abstoßende Kraft erzeugt, die den Ventilschaft (23) so an die Ventilscheibe (21) drückt, dass er an der Ventilscheibe (21) anliegt, und der Ventilschaft (23) durch die Elastizität der ersten Feder (25) in diesem Zustand gehalten wird, um den Wasserfluss des Hauptkörpers (10) zu stoppen, auch nachdem der Zeitgeber (50) die Stromversorgung unterbrochen hat, wobei, wenn der Zeitgeber (50) die elektromagnetische Spule (22) mit Strom versorgt, um die EIN/AUS-Ventilanordnung (20) von dem Wasserstoppzustand in den Wasserflusszustand zu schalten, die elektromagnetische Spule (22) durch den Zeitgeber (50) eingeschaltet wird und somit den Ventilschaft (23) magnetisch anzieht, so dass der Ventilschaft (23) von der Ventilscheibe (21) entfernt wird und nicht mehr an der Ventilscheibe (21) anliegt, wodurch der Wassereinlass (11), der ringförmige Durchgang (15), das Verbindungsrohr (14) und der Wasserauslass (12) miteinander kommunizieren können, so dass Wasser durch diese Teile (11, 15, 14, 12) fließen kann, wohingegen, wenn die elektromagnetische Spule (22) ausgeschaltet ist, die Magnetkraft des Magneten (24) den Ventilschaft (23) weiterhin magnetisch anzieht, um den Wasserflusszustand des Ventilschafts (23) aufrechtzuerhalten.

3. Gartenschlauch-EIN/AUS-Zeitgebereinheit nach Anspruch 1, bei welcher die feste Halterung (30) aus einem ersten Gehäuse (31) und einem zweiten Gehäuse (32) besteht, die miteinander kombiniert sind und an jedem der beiden Enden des ersten Gehäuses (31) und des zweiten Gehäuses (32) eine Aussparung (33) aufweisen, ein in der Mitte des ersten Gehäuses (31) ausgebildetes Durchgangsloch (34), und eine sich von der Mitte des ersten Gehäuses (31) erstreckende Buchse (35) aufweisen, wobei die Aussparungen (33), das Durchgangsloch (34) und die Buchse (35) Möglichkeiten für Umgehungen bieten, wobei durch die Kombination des ersten Gehäuses (31) und des zweiten Gehäuses (32) miteinander, der Hauptkörper (10) umschlossen und verschlossen wird, wobei der Wassereinlass (11), der Wasserauslass (12) und das Ventilrohr (13) aus der festen Halterung (30) herausragen, und wobei die feste Halterung (30) am Hauptkörper (10) befestigt ist, wobei auf dem vorstehenden Sitz (36) eine Ringnut (37) angeordnet ist, und
wobei die bewegliche Basis (40) aus einem ersten Gehäuse (41) und einem zweiten Gehäuse (42) besteht, die miteinander kombiniert sind und eine Öffnung (43), die an jedem der beiden Enden des ersten Gehäuses (41) und des zweiten Gehäuses (42) vorgesehen ist, ein Positionierungsloch (44), das in der Öffnung (43) des ersten Gehäuses (41) und/oder des zweiten Gehäuses (42) ausgebildet ist, und eine widerhakenförmige Verriegelungskante (47) aufweist, das an der Außenseite der Öffnung (43) ringförmig angeordnet ist, wobei die Verriegelungskante (47) in die Ringnut (37) eingreift, wenn das erste Gehäuse (41) und das zweite Gehäuse (42) miteinander kombiniert werden, wodurch die bewegliche Basis (40) an der festen Halterung (30) in einer Position montiert ist, die der Position des Ventilrohrs (13) entspricht, so dass die bewegliche Basis (40) schwenkbar mit der festen Halterung (30) verbunden ist.

4. Gartenschlauch als EIN/AUS-Zeitgebereinheit nach Anspruch 3, bei welchem sich mindestens eine Sperrplatte (39) von der Buchse (35) aus erstreckt.

5. Gartenschlauch als EIN/AUS-Zeitgebereinheit nach Anspruch 1, bei welchem der Zeitgeber (50) ferner mit einem Batteriefach (53) und Batterien (54) versehen ist, wobei die Batterien (54) den Zeitgeber (50) und die
EIN/AUS-Ventilanordnung (20) mit elektrischer Energie für den Betrieb versorgen.

6. Gartenschlauch-EIN/AUS-Zeitgebereinheit nach Anspruch 1, bei welcher die bewegliche Basis (40) es ermöglicht, den Zeitgeber (50) in einen Winkel zu schwenken, in dem Staub, Schlamm und Sand von dem Anzeigefeld (51) abgeschlagen werden, um das Anzeigefeld (51) sauber zu halten.

## Revendications

1. Unité de minuterie MARCHE/ARRÊT pour tuyau d'arrosage dotée d'un écran d'affichage à angle de vue réglable comprenant un corps principal (10), un ensemble de soupape MARCHE/ARRÊT (20), un support fixe (30), une base mobile (40) et une minuterie (50), dans laquelle
le corps principal (10) présente une arrivée d'eau (11) et une évacuation d'eau (12) s'étendant depuis deux extrémités opposées d'une partie centrale de celui-ci et un tuyau de soupape (13) étant agencé entre l'arrivée d'eau (11) et l'évacuation d'eau (12) et s'étendant depuis un côté de la partie centrale du corps principal (10), l'ensemble de soupape MARCHE/ARRÊT (20) étant monté sur le tuyau de soupape (13) et le fonctionnement de l'ensemble de soupape MARCHE/ARRÊT (20) est commandé par la minuterie (50) de sorte que le passage de l'eau dans le corps principal (10) peut être ouvert et fermé en commutant l'ensemble de soupape MARCHE/ARRÊT (20) sur marche et arrêt ;
le support fixe (30) est fixé à la partie centrale du corps principal (10) de telle sorte que l'arrivée d'eau (11), l'évacuation d'eau (12) et le tuyau de soupape (13) s'étendent tous hors du support fixe (30), dans laquelle la base mobile (40) est reliée de manière à pouvoir pivoter au support fixe (30) à une position correspondant à la position du tuyau de soupape (13), de sorte que la base mobile (40) est capable de pivoter sur le support fixe (30) ; et
la minuterie (50) est montée dans la base mobile (40) et pourvue d'un écran d'affichage (51) et d'une interface opérationnelle (52) actionnée en appuyant sur des touches, l'écran d'affichage (51) et l'interface opérationnelle (52) étant exposés sur la base mobile (40), la minuterie (50) étant mobile avec la base mobile (40) lors du pivotement de la base mobile (40) par rapport au support fixe (30) de manière à régler un angle de vue pour l'écran d'affichage (51) ;
**caractérisée en ce que**
le support fixe (30) définit un siège en saillie (36) dans une position correspondant à la position du tuyau de soupape (13), dans laquelle le siège en saillie (36) est pourvu d'un trou traversant (34) pour passer le tuyau de soupape (13) à travers celui-ci et une bague (35), dans laquelle une pluralité d'évidements de positionnement (38) sont agencés de manière annulaire sur la paroi externe de la bague (35), la bague (35) du support fixe (30) étant insérée dans une
ouverture (43) correspondante définie sur la base mobile (40), dans laquelle la base mobile (40) définit en outre un trou de positionnement (44), dans laquelle un second ressort (45) et une broche de positionnement (46) devant être poussés vers l'extérieur par le second ressort (45) sont placés dans le trou de positionnement (44), dans laquelle le trou de positionnement (44) de la base mobile (40) et la bague (35) du support fixe (30) sont agencés de manière correspondante, de sorte que la broche de positionnement (46) est insérée de manière élastique dans l'un des évidements correspondants parmi la pluralité d'évidements de positionnement (38), de sorte qu'après le pivotement vers un angle de vue souhaité, la base mobile (40) est fixée dans sa position correspondante par mise en prise élastique de la broche de positionnement (46) dans l'évidement de positionnement correspondant (38).

2. Tuyau d'arrosage en tant que minuterie MARCHE/ARRÊT selon la revendication 1, dans lequel un tuyau de communication (14) est disposé à l'intérieur du corps principal (10) à l'opposé du tuyau de soupape (13) et coaxialement au même, tandis que l'agencement du tuyau de communication (14) sert de séparation, tandis qu'un passage annulaire (15) est agencé entre le tuyau de communication (14) et l'arrivée d'eau (11) de sorte que le tuyau de communication (14) et l'arrivée d'eau (11) sont reliés indirectement l'un à l'autre au moyen du passage annulaire (15), alors que le tuyau de communication (14) et l'évacuation d'eau (12) sont reliés directement l'un à l'autre ; et
l'ensemble de soupape MARCHE/ARRÊT (20) comprend un disque de soupape (21) recouvrant le tuyau de communication (14) et le passage annulaire (15) par le haut, une bobine électromagnétique (22) enroulée sur la circonférence externe du tuyau de soupape (13), une tige de soupape (23) en métal et un aimant (24) disposés respectivement dans deux chambres à l'intérieur du tuyau de soupape (13) gainé par la bobine électromagnétique (22), le disque de soupape (21) étant agencé au-dessus de la tige de soupape (23), la tige de soupape (23) étant précontrainte par un premier ressort (25) dans la direction du disque de soupape (21), l'aimant (24) étant disposé en dessous de la tige de soupape (23) et du premier ressort (25), la force magnétique de l'aimant (24) étant plus importante que l'élasticité du premier ressort (25) ;
la minuterie (50) étant configurée pour permettre l'alimentation électrique de la bobine électromagnétique (22) pour commuter l'ensemble de soupape MARCHE/ARRÊT (20) entre un état d'arrêt d'eau et un état d'écoulement d'eau, dans lequel, lorsque la bobine électromagnétique (22) enroulée sur la circonférence externe du tuyau de soupape (13) est activée, la tige de soupape métallique (23) à l'intérieur du tuyau de soupape (13) est entraînée pour se déplacer, dans lequel, lorsque la minuterie (50) fournit du courant à la bobine électromagnétique (22) pour commuter l'ensemble de soupape MARCHE/ARRÊT (20) à l'état d'arrêt d'eau, la bobine électromagnétique (22) génère une force de répulsion poussant la tige de soupape (23) vers le disque de soupape (21) de telle sorte qu'elle vient en butée contre le disque de soupape (21) et la tige de soupape (23) étant maintenue dans cet état par l'élasticité du premier ressort (25) pour arrêter l'écoulement d'eau du corps principal (10) également après que la minuterie (50) a interrompu l'alimentation électrique, dans lequel lorsque la minuterie (50) fournit du courant à la bobine électromagnétique (22) pour commuter l'ensemble de soupape MARCHE/ARRÊT (20) de l'état d'arrêt d'eau à l'état d'écoulement d'eau, la bobine électromagnétique (22) est mise sous tension par la minuterie (50) et attire ainsi magnétiquement la tige de soupape (23) de sorte que la tige de soupape (23) est retirée du disque de soupape (21) et ne vient plus en butée contre le disque de soupape (21), selon lequel l'arrivée d'eau (11), le passage annulaire (15), le tuyau de communication (14) et l'évacuation d'eau (12) peuvent communiquer les uns avec les autres de sorte que l'eau peut s'écouler à travers ces sections (11, 15, 14, 12), tandis que, lorsque la bobine électromagnétique (22) est mise hors tension, la force magnétique de l'aimant (24) continue d'attirer magnétiquement la tige de soupape (23) pour maintenir l'état d'écoulement d'eau de la tige de soupape (23).

3. Minuterie MARCHE/ARRÊT pour tuyau d'arrosage selon la revendication 1, dans laquelle le support fixe (30) se compose d'une première enceinte (31) et d'une seconde enceinte (32) qui sont associées l'une à l'autre et présentent une encoche (33) réservée sur chacune des deux extrémités de la première enceinte (31) et de la seconde enceinte (32), le trou traversant (34) étant formé au milieu de la première enceinte (31), et la bague (35) s'étendant depuis le milieu de la première enceinte (31), tandis que les encoches (33), le trou traversant (34) et la bague (35) offrent des possibilités de fuite, tandis qu'en associant la première enceinte (31) et la seconde enceinte (32) l'une à l'autre, le corps principal (10) est fermé et verrouillé, selon lequel l'arrivée d'eau (11), l'évacuation d'eau (12) et le tuyau de soupape (13) s'étendent hors du support fixe (30), et le support fixe (30) étant fixé sur le corps principal (10), une rainure annulaire (37) étant agencée sur le siège en saillie (36) ; et
la base mobile (40) se compose d'un premier boîtier (41) et d'un second boîtier (42) qui sont associés l'un à l'autre et présentent une ouverture (43) réservée sur chacune des deux extrémités du premier boîtier (41) et du second boîtier (42), un trou de positionnement (44) étant formé dans l'ouverture (43) du premier boîtier (41) et/ou du second boîtier (42), et un bord de verrouillage cannelé (47) étant agencé de manière annulaire sur le côté externe de l'ouverture (43), le bord de verrouillage (47) entre en prise dans la rainure annulaire (37) lors de l'association du premier boîtier (41) et du second boîtier (42) l'un avec l'autre, selon lequel la base mobile (40) est montée sur le support fixe (30) dans une position de celui-ci correspondant à la position du tuyau de soupape (13) de telle sorte que la base mobile (40) est relié de manière à pouvoir pivoter au support fixe (30).

4. Tuyau d'arrosage en tant que minuterie MARCHE/ARRÊT selon la revendication 3, dans lequel au moins une plaque de blocage (39) s'étend depuis la bague (35).

5. Minuterie MARCHE/ARRÊT pour tuyau d'arrosage selon la revendication 1, dans laquelle la minuterie (50) est pourvue en outre d'un compartiment à piles (53) et de piles (54), tandis que les piles (54) alimentent la minuterie (50) et l'ensemble de soupape MARCHE/ARRÊT (20) en courant électrique pour le fonctionnement.

6. Minuterie MARCHE/ARRÊT pour tuyau d'arrosage selon la revendication 1, dans laquelle la base mobile (40) permet à la minuterie (50) de pivoter vers un angle, dans laquelle de la poussière, de la boue et du sable sont éliminés de l'écran d'affichage (51) afin de garder l'écran d'affichage (51) propre.
